# EUROPÄISCHE PATENTSCHRIFT

(11) **EP 1 031 516 B1**
(45) Veröffentlichungstag und Bekanntmachung des Hinweises auf die Patenterteilung: **03.01.2007**
(21) Anmeldenummer: 00100903.4
(22) Anmeldetag: 18.01.2000
(51) Int. Cl.: B65D 77/20, B32B 15/08

(54) **Abdeckung für einen Behälter, insbesondere für Lebensmittelprodukte**
Cover for a container, especially for food
Couvercle pour récipient, en particulier pour aliments

(30) Priorität: 25.02.1999 DE 29903364 U
(43) Veröffentlichungstag der Anmeldung: 30.08.2000
(73) Patentinhaber: Hueck Folien GmbH & Co. KG, 92712 Pirk (DE)
(72) Erfinder: Rau, Claus, 92536 Pfreimd (DE); Kammerer, Hans-Hermann, 92367 Weiden (DE)
(74) Vertreter: Schneck, Herbert

(56) Entgegenhaltungen:
- EP-A- 0 488 452
- EP-A- 0 860 271
- FR-A- 2 542 700
- US-A- 5 721 028

## Beschreibung

Die Erfindung richtet sich auf eine Abdeckung für einen Behälter aus Kunststoff und/oder Folie, insbesondere für Milchprodukte wie Joghurt, Käse oder Desserts, bestehend aus einer Basis-Folie aus Kunststoff oder Metall oder einem Basis-Laminat und einem Aufdruck an der Sichtseite.

Die Herstellung des Aufdrucks auf derartige Abdeckungen erfolgt herkömmlicherweise im Flexo- oder Tiefdruck. Diese Druckverfahren sind, wenn es um die Herstellung von Kleinaufträgen geht, äußerst unrationell. Muß beispielsweise für Messen oder eine interne Produktvorstellung die Qualität der Verschlußfolien bzw. Abdeckungen mit dem später auf dem Markt befindlichen Endprodukt identisch sein, so muß in teuere Druckzylinder und Maschinenkosten investiert werden. Alternativ müssen mit anderen Andruckverfahren Muster hergestellt werden, welche dann aber mit dem auf einer Druckmaschine produzierten Original nicht vergleichbar sind. Werden nach der Vorstellung eines solchen Produkts nochmals Änderungen erforderlich und wurden bereits Druckzylinder produziert, so müssen wiederum neue Druckzylinder erstellt werden, was die Kosten nochmals erhöht.

Aus der EP 0 860 271 A1 sind mehrere Abdeckungen der eingangs genannten Art für Behälter bekannt. Eine Abdeckung weist auf einer Sichtseite einen Aufdruck auf. Nachteilig bei dieser bekannten Abdeckung ist, dass diese nicht wirtschaftlich in kleinen Serien gefertigt werden kann.

Hiervon ausgehend liegt der Erfindung die Aufgabe zugrunde, Kleinserien und Muster derartiger Abdeckungen so auszugestalten, daß sie einerseits in Qualität und Erscheinungsbild dem späteren Original weitestgehend entsprechen und andererseits eine wirtschaftliche Herstellung und gegebenenfalls Änderung gewährleistet ist.

Diese Aufgabe wird erfindungsgemäß dadurch gelöst, daß der durch eine Digitaldruckmaschine hergestellte Aufdruck zwischen zwei Schichten angeordnet ist, wobei eine der Schichten eine Niedertemperatur-Heißsiegellackschicht ist, wobei zwischen dem Aufdruck und der Niedertemperatur-Heißsiegellackschicht zumindest eine weitere Schicht vorgesehen ist, wobei die beim Druckprozess eingesetzte Tinte nur bis 100°C temperaturbeständig ist, wobei die Niedertemperatur-Heißsiegellackschicht aus in Wasser dispergierten Acrylharzen besteht, und wobei als Primer in Wasser dispergierte Acrylharze eingesetzt werden.

Durch die Verwendung einer Digitaldruckmaschine ist es möglich, den an sich kongurierenden Anforderungen gerecht zu werden, daß derartige Abdeckungen üblicherweise bei Temperaturen zwischen 180° C und 250° C gesiegelt werden, wohingegen die derzeit erhältlichen Druckfarben für den Digitaldruck nur bis 100° C stabil sind und die normalerweise eingesetzten Heißsiegellacke erst bei 160° C richtig zu siegeln beginnen.

Die erfindungsgemäß vorgesehene Einbettung der digitalen Druckfarben in zwei Schichten schützt diese Druckfarben und die Verwendung einer Niedertemperatur-Heißsiegellackschicht verhindert eine Beschädigung derselben aufgrund höherer Temperaturen.

Bei einer bevorzugten Ausführungsform ist vorgesehen, daß wenigstens eine der Schichten eine reaktive Schicht ist, welche günstigerweise aus einem nichtvernetzten Material bestehen, das physikalisch trocknet und auf dem die Digitalfarben bei einer Übertragungstemperatur von 80 bis 140° C verankert werden.

Es kann auch eine nachträgliche Überlackierung mit einem übervernetzten System enthaltend einen migrationsfähigen Härter vorgesehen sein.

Eine alternative Ausführungsform sieht vor, daß die Druckfarben des Aufdrucks zwischen zwei Einkomponentenschichten eingebettet und mit diesen eingebrannt sind.

Eine Einbrennlackschicht kann gebildet sein durch Polyester Melamin, Acrylat Melamin, Acrylat Polyfunk. Aziridin und Epoxid.

Eine reaktive Schicht kann gebildet sein durch einen Zweikomponentenlack auf Polyurethan-Basis.

Eine Einkomponentenschicht, die insbesondere in Verbindung mit einer oberen Schicht eines Zweikomponentenlacks eingesetzt wird, kann auf Polyester-Basis oder Acrylat-Basis ausgebildet sein.

Nachfolgend wir die Erfindung anhand zweier Ausführungsbeispiele näher erläutert:

### Ausführungsbeispiel A:

Eine Abdeckung gemäß diesem Ausführungsbeispiel umfaßt von oben nach unten folgende Schichten:
Einbrennlack, Digitaldruck-Farben, Primer, Einbrennlack, Aluminiumfolie, Primer, Heißsiegellack.

Als Einbrennlack kommt in Betracht Polyester Melamin, Acrylat Melamin, Acrylat Polyfunk. Aziridin und Epoxid.

Als Primer kommen in Betracht dispergierte Acrylharze. Als Heißsiegellack eignen sich ebenfalls dispergierte Acrylharze.

### Ausführungsbeispiel B:

Bei dieser Ausführungsform der Abdeckung sind in der Reihenfolge von oben nach unten folgende Schichten vorgesehen:
Zweikomponentenlack, Digitaldruck-Farben, Einkomponenten- oder Zweikomponentenlack, Aluminiumfolie, Primer, Heißsiegellack.

Als Zweikomponentenlack wird Polyurethan verwendet und als Einkomponentenlack Polyester oder Acrylat.

Als Primer dienen dispergierte Acrylharze und als Heißsiegellack in Wasser dispergierte Acrylharze.

## Patentansprüche

1. Abdeckung für einen Behälter aus Kunststoff und/oder Folie, insbesondere für Milchprodukte wie Joghurt, Käse oder Desserts, bestehend aus einer Basis-Folie aus Kunststoff oder Metall oder einem Basis-Laminat und einem sichtbaren Aufdruck, wobei
- der durch eine Digitaldruckmaschine hergestellte Aufdruck zwischen zwei Schichten angeordnet ist,
- eine der Schichten eine Niedertemperatur-Heißsiegellackschicht ist,
- zwischen dem Aufdruck und der Niedertemperatur-Heißsiegellackschicht zumindest eine weitere Schicht vorgesehen ist,
- die beim Druckprozess eingesetzte Tinte nur bis 100 °C temperaturbeständig ist,
- die Niedertemperatur-Heißsiegellackschicht aus in Wasser dispergierten Acrylharzen besteht und
- als Primer in Wasser dispergierte Acrylharze eingesetzt werden.

2. Abdeckung nach Anspruch 1, **dadurch gekennzeichnet, dass** wenigstens eine der dem Aufdruck benachbarten Schichten eine reaktive Schicht ist.

3. Abdeckung nach Anspruch 2, **dadurch gekennzeichnet, daß** die reaktiven Schichten aus einem nichtvernetzten Material bestehen, das physikalisch trocknet und auf dem die Digitaldruckfarben bei einer Übertragungstemperatur von 80 bis 140° C verankert werden.

4. Abdeckung nach Anspruch 3, **gekennzeichnet durch** eine nachträgliche Überlackierung mit einem übervernetzten System enthaltend einen migrationsfähigen Härter.

5. Abdeckung nach Anspruch 1, **dadurch gekennzeichnet, daß** die Druckfarben des Aufdrucks zwischen zwei Einkomponentenschichten eingebettet und mit diesen eingebrannt sind.

6. Abdeckung nach Anspruch 5, **dadurch gekennzeichnet, daß** wenigstens eine Einkomponentenschicht durch eine Einbrennlackschicht gebildet ist, insbesondere aus Polyester Melamin, Acrylat Melamin, Acrylat Polyfunk. Aziridin und Epoxid.

7. Abdeckung nach Anspruch 2, **dadurch gekennzeichnet, daß** wenigstens eine reaktive Schicht durch einen Zweikomponentenlack auf Polyurethan-Basis gebildet ist.

8. Abdeckung nach Anspruch 5, **dadurch gekennzeichnet, daß** die Einkomponentenschicht auf Polyesterbasis oder Acrylat-basis ausgebildet ist.

## Claims

1. Cover for a container made from plastics material and/or film, in particular for dairy products such as yogurt, cheese or desserts, consisting of a base sheet made from plastics material or metal or a base laminate and a visible imprint, wherein
- the imprint is positioned between two layers and is produced by a digital printing machine
- one of the layers is a low temperature heat seal enamel layer
- at least one further layer is provided between the imprint and the low temperature heat seal enamel layer
- the ink used during the printing process is thermally stable up to only 100° C
- the low temperature heat seal enamel layer consists of water-dispersed acrylic resins
- water-dispersed acrylic resins are used as the primer.

2. Cover according to claim 1, **characterised in that** at least one of the layers adjacent to the imprint is a reactive layer.

3. Cover according to claim 2, **characterised in that** the reactive layers consist of a non- crosslinked material that dries physically and on which the digital printing inks are fixed at a transition temperature of from 80 to 140 °C.

4. Cover according to claim 3, **characterised by** a subsequent overcoating with an over-crosslinked system containing a curing agent which can migrate.

5. Cover according to claim 1, **characterised in that** the printing inks of the imprint are embedded between two single component layers and are stoved therewith.

6. Cover according to claim 5, **characterised in that** at least one single component layer is formed by a stoved enamel layer, in particular made from polyester melamine, acrylate melamine, polyfunctional acrylate, aziridine and epoxide.

7. Cover according to claim 2, **characterised in that** at least one reactive layer is formed by a two polyurethane-based component coat.

8. Cover according to claim 5, **characterised in that** the single component layer is polyester-based or acrylate-based.

## Revendications

1. Couvercle pour récipient en plastique et/ou en film, en particulier pour des produits laitiers tels que le yaourt, le fromage ou les desserts, se composant d'un film de base en plastique ou en métal ou d'un stratifié de base et d'une empreinte visible,
- l'empreinte réalisée par une machine d'impression numérique étant disposée entre deux couches,
- l'une des couches étant une couche de laque thermosoudable à basse température,
- une autre couche au moins étant prévue entre l'empreinte et la couche de laque thermosoudable à basse température,
- l'encre utilisée lors du processus d'impression n'étant résistante à chaud que jusqu'à 100°C,
- la couche de laque thermosoudable à basse température se composant de résines acryliques dispersées dans de l'eau et
- des résines acryliques dispersées dans de l'eau étant utilisées comme couche de fond.

2. Couvercle selon la revendication 1, **caractérisé en ce qu'**au moins une des couches voisines de l'empreinte est une couche réactive.

3. Couvercle selon la revendication 2, **caractérisé en ce que** les couches réactives se composent d'un matériau non réticulé qui sèche physiquement et dans lequel sont ancrées les encres d'impression numérique à une température de transfert allant de 80 à 140°C.

4. Couvercle selon la revendication 3, **caractérisé par** un surlaquage ultérieur avec un système hyperréticulé comprenant un durcisseur capable de migrer.

5. Couvercle selon la revendication 1, **caractérisé en ce que** les encres d'impression de l'empreinte sont insérées entre deux couches à un composant et cuites avec celles-ci.

6. Couvercle selon la revendication 5, **caractérisé en ce qu'**au moins une couche à un composant est formée par une couche de laque à cuire, en particulier en mélamine polyester, mélamine acrylate, aziridine polyfonctionnelle acrylate et résine époxy.

7. Couvercle selon la revendication 2, **caractérisé en ce qu'**au moins une couche réactive est formée par une laque à deux composants à base de polyuréthane.

8. Couvercle selon la revendication 5, **caractérisé en ce que** la couche à un composant est formée à base de polyester ou d'acrylate.
